# EUROPEAN PATENT APPLICATION

(11) **EP 4 492 100 A1**
(43) Date of publication of application: **15.01.2025**
(21) Application number: 23811362.5
(22) Date of filing: 03.02.2023
(51) Int. Cl.: G01T 1/24, G01N 23/04

(54) **RADIATION DETECTION DEVICE, RADIATION DETECTION SYSTEM, AND RADIATION DETECTION METHOD**

(30) Priority: 25.05.2022 JP 2022085257
(71) Applicant: Hamamatsu Photonics K.K., Hamamatsu-shi, Shizuoka 435-8558 (JP)
(72) Inventor: SUZUKI Haruki, Hamamatsu-shi, Shizuoka 435-8558 (JP); KAMIYA Masahiro, Hamamatsu-shi, Shizuoka 435-8558 (JP)
(74) Representative: Grünecker Patent- und Rechtsanwälte PartG mbB
(86) International application number: PCT/JP2023/003642
(87) International publication number: WO 2023/228481

(57) **Abstract**

An X-ray detection camera comprises a radiation detection element that directly converts an incident X-ray into an electric charge and outputs a result of collecting the electric charge for each of a plurality of third electrodes as X-ray image data, a first bias power supply that applies a bias voltage to the radiation detection element, and a control unit. The control unit comprises a determination unit that executes determination process of determining whether or not a reset operation for executing voltage control on the radiation detection element so that electric charge is not collected by the radiation detection element is executable based on the X-ray image data, and a voltage control unit that controls a voltage source to execute the reset operation when the determination unit determines that the reset operation is executable.

## Description

### Technical Field

One aspect of the present invention relates to a radiation detection apparatus, a radiation detection system, and a radiation detection method.

### Background Art

Conventionally, a radiation detection apparatus that detects radiation transmitted through an object is known. In such a radiation detection apparatus, for example, the radiation transmitted through the object is directly converted into an electric charge by the direct conversion material of the detection element, and the electric charge is collected by the pixel electrode, whereby the radiation is detected and a radiation imaged image is obtained. Here, in such a radiation detection apparatus, when the detection element is continuously irradiated with radiation, a polarization phenomenon (polarization) occurs in the detection element, and a radiation imaged image may be deteriorated. Therefore, it is required to eliminate the polarization phenomenon in the detection element.

In the radiation detection apparatus described in Patent Literature 1, a polarization phenomenon in the radiation detection apparatus is eliminated by turning on/off a high voltage (HV) supplied from a HV power supply apparatus to the radiation detection apparatus at a predetermined cycle.

In the pair of radiation detection apparatuses described in Patent Literature 2, when the bias voltage is supplied from the bias power supply to the radiation detection apparatus configuring one array, the supply destination of the bias voltage is switched to the radiation detection apparatus configuring the other array before the polarization phenomenon occurs in the radiation detection apparatus configuring one array, thereby suppressing the occurrence of the polarization phenomenon in the radiation detection apparatus.

In the plurality of radiation detection apparatuses described in Patent Literature 3, the bias voltage is applied so that the stop periods of the bias application to the respective radiation detection apparatuss do not overlap with each other, thereby suppressing simultaneous occurrence of the polarization phenomenon in the plurality of radiation detection es.

### Citation List

### Patent Literature

Patent Literature 1: Japanese Unexamined Patent Publication No. 2006-513406
Patent Literature 2: Japanese Unexamined Patent Publication No. 2008-304420
Patent Literature 3: WO No. 2009/122665

### Summary of Invention

### Technical Problem

In the above-described radiation detection apparatus, the application of the bias voltage is stopped without considering the situation outside the radiation detection apparatus in order to eliminate the polarization phenomenon in the radiation detection apparatus. Therefore, in a case where the timing at which the polarization phenomenon in the detection element is eliminated in the radiation detection apparatus overlaps with the timing at which the radiation entering the radiation detection apparatus transmits through the object, there is a possibility that the radiation detection apparatus cannot detect the radiation that has transmitted through the object.

One aspect of the present invention has been made in view of the above circumstances, and relates to a radiation detection apparatus, a radiation detection system, and a radiation detection method capable of suppressing occurrence of a polarization phenomenon in a detection element and more reliably detecting radiation entering the radiation detection apparatus when the radiation is transmitted through an object.

### Solution to Problem

(1) A radiation detection apparatus according to one aspect of the present invention comprises a detection element that directly converts incident radiation into electric charges and outputs a result of collecting electric charges for each of a plurality of pixel electrodes as imaged image data; a voltage source that applies a bias voltage to the detection element; and a control unit electrically coupled to the detection element and the voltage source. The control unit comprises a determination unit that executes a determination process of determining whether or not a reset operation for executing a voltage control on the detection element so that electric charge is not collected by the detection element is executable based on the imaged image data output from the detection element, and a voltage control unit that controls a voltage source to execute the reset operation when the determination unit determines that the reset operation is executable.

In the radiation detection apparatus according to one aspect of the present invention, whether or not a reset operation for executing a voltage control on the detection element so that electric charges are not collected by the detection element is executable is determined based on the imaged image data output from the detection element. According to such a configuration, whether the reset operation is executable is determined in consideration of the information indicated in the imaged image data output from the detection element, that is, the situation outside the radiation detection apparatus. As a result, for example, whether or not the radiation entering the radiation detection apparatus is transmitted through the object can be determined based on the imaged image data. As a result, for example, the voltage source can execute the reset operation at the timing when the radiation entering the radiation detection apparatus is not transmitted through the object, and the voltage source can execute the voltage control on the detection element so that the electric charge is collected by the detection element at the timing when the radiation entering the radiation detection apparatus is transmitted through the object. As a result, the occurrence of the polarization phenomenon in the detection element can be suppressed, and the radiation entering the radiation detection apparatus can be more reliably detected when the radiation is transmitted through the object.

(2) In the radiation detection apparatus according to (1), the determination unit may determine that the reset operation is executable in a case where the determination unit determines, in the determination process, that radiation is not transmitted through the object based on the imaged image data. According to such a configuration, the reset operation is executed by the voltage source at the timing when the radiation entering the radiation detection apparatus is not transmitted through the object, and the voltage control on the detection element can be executed by the voltage source such that the electric charge is collected by the detection element at the timing when the radiation entering the radiation detection apparatus is transmitted through the object. As a result, the occurrence of the polarization phenomenon in the detection element can be suppressed, and the radiation entering the radiation detection apparatus can be more reliably detected when the radiation is transmitted through the object.

(3) In the radiation detection apparatus according to (2), the determination unit may determine that the radiation is not transmitted through the object in a case where the luminance value in the imaged image data exceeds a predetermined threshold value in the determination process. According to such a configuration, whether or not the radiation entering the radiation detection apparatus is transmitted through the object can be more reliably determined. As a result, the reset operation is more reliably executed at the timing when the radiation entering the radiation detection apparatus is not transmitted through the object.

(4) In the radiation detection apparatus according to (2), the determination unit may determine that the radiation is not transmitted through the object in a case where the luminance value in the imaged image data falls below a predetermined threshold value in the determination process. According to such a configuration, for example, in a case where an object that shields or significantly absorbs radiation is disposed at a place where an object is not disposed, whether or not radiation entering the radiation detection apparatus is transmitted through the object can be more reliably determined. As a result, the reset operation is more reliably executed at the timing when the radiation entering the radiation detection apparatus is not transmitted through the object.

(5) In the radiation detection apparatus according to (3) or (4), the detection element may continuously output imaged image data. After the reset operation is executed, the determination unit may not perform the determination process until the change amount of the luminance value among the plurality of imaged image data continuously output from the detection element exceeds the predetermined threshold value, and may perform the determination process when the change amount exceeds the predetermined threshold value. According to such a configuration, after the reset operation is executed, the determination process is resumed only after the imaging of the object by the radiation detection apparatus is finished. Thus, it is possible to suppress the execution of the reset operation until it is again necessary to eliminate the polarization phenomenon in the radiation detection apparatus after the reset operation is executed. As a result, the radiation detection apparatus can be operated more efficiently.

(6) In the radiation detection apparatus according to any one of (2) to (4), the determination unit may not perform the determination process until a predetermined period, which is a period in which the reset operation is unnecessary, has elapsed after the reset operation is executed, and may execute the determination process when the predetermined period has elapsed. According to such a configuration, it is possible to suppress the execution of the reset operation until it is again necessary to eliminate the polarization phenomenon in the radiation detection apparatus after the reset operation is executed. As a result, the radiation detection apparatus can be operated more efficiently.

(7) In the radiation detection apparatus according to (6), the detection element may operate based on the reference clock. The determination unit may determine whether or not the predetermined period has elapsed by counting the reference clock. According to such a configuration, it is possible to more accurately determine whether or not the predetermined time has elapsed based on the reference clock. Thus, it is possible to more reliably suppress the execution of the reset operation until it is again necessary to eliminate the polarization phenomenon in the radiation detection apparatus after the reset operation is executed.

(8) In the radiation detection apparatus according to any one of (1) to (7), the reset operation may be either an operation of stopping application of a voltage to the detection element or an operation of applying a reverse bias voltage to the detection element. According to such a configuration, the polarization phenomenon in the radiation detection apparatus can be more reliably eliminated.

(9) A radiation detection system according to one aspect of the present invention comprises the radiation detection apparatus according to any one of (1) to (8), a light source that emits radiation, and a conveyance apparatus that conveys an object such that the object passes through a radiation irradiation region.

In a radiation detection system according to one aspect of the present invention, radiation emitted from a light source enters a detection element. The object conveyed by the conveyance apparatus passes through the radiation irradiation region. Then, based on the imaged image data output from the detection element, whether or not a reset operation for executing a voltage control on the detection element so that electric charge is not collected by the detection element is executable is determined. According to such a configuration, whether the reset operation is executable is determined in consideration of the information indicated in the imaged image data output from the detection element, that is, the situation outside the radiation detection apparatus. As a result, for example, since the irradiation region of the radiation is imaged by the detection element, it is possible to determine whether or not the radiation entering the radiation detection apparatus is transmitted through the object based on the imaged image data. As a result, for example, the voltage source can execute the reset operation at the timing when the radiation entering the radiation detection apparatus is not transmitted through the object, and the voltage source can execute the voltage control on the detection element so that the electric charge is collected by the detection element at the timing when the radiation entering the radiation detection apparatus is transmitted through the object. As a result, the occurrence of the polarization phenomenon in the detection element can be suppressed, and the radiation entering the radiation detection apparatus can be more reliably detected when the radiation is transmitted through the object.

(10) A radiation detection method according to one aspect of the present invention comprises a step of directly converting incident radiation into electric charge and applying a bias voltage to a detection element that outputs a result of collecting an electric charge for each of a plurality of pixel electrodes as imaged image data; a step of acquiring the imaged image data from the detection element; a step of determining whether or not a reset operation for executing voltage control on the detection element so that electric charge is not collected by the detection element is executable based on the imaged image data output from the detection element; and a step of executing the reset operation when determination is made that the reset operation is executable in the step of determining.

In the radiation detection method according to one aspect of the present invention, in the step of determination step, whether or not a reset operation for executing a voltage control on the detection element so that electric charge is not collected by the detection element can be executed is determined based on the imaged image data acquired in the step of acquiring. According to such a configuration, whether the reset operation is executable is determined in consideration of the information indicated in the imaged image data output from the detection element, that is, the situation outside the radiation detection apparatus. As a result, for example, whether or not the radiation entering the radiation detection apparatus is transmitted through the object can be determined based on the imaged image data. As a result, for example, the voltage source can execute the reset operation at the timing when the radiation entering the radiation detection apparatus is not transmitted through the object, and the voltage source can execute the voltage control on the detection element so that the electric charge is collected by the detection element at the timing when the radiation entering the radiation detection apparatus is transmitted through the object. As a result, the occurrence of the polarization phenomenon in the detection element can be suppressed, and the radiation entering the radiation detection apparatus can be more reliably detected when the radiation is transmitted through the object.

### Advantageous Effects of Invention

According to a radiation detection apparatus, a radiation detection system, and a radiation detection method according to one aspect of the present invention, occurrence of a polarization phenomenon in a detection element can be suppressed and radiation entering the radiation detection apparatus can be more reliably detected when the radiation is transmitted through an object.

### Brief Description of Drawings

FIG. 1 is a configuration diagram of an X-ray inspection apparatus according to a first embodiment.
FIG. 2 is a configuration diagram of an X-ray detection camera.
FIG. 3 is a block diagram illustrating a functional configuration of a control unit.
FIG. 4 is a diagram for explaining functions of a determination unit and a voltage control unit.
FIG. 5 is a diagram for explaining a distance between inspection objects in the X-ray inspection apparatus.
FIG. 6 is a diagram illustrating an irradiation range of X-rays in the light source shown in FIG. 1.
FIG. 7 is a flowchart according to an example of a process of executing a reset operation of the radiation detection method according to the first embodiment.
FIG. 8 is a table for explaining problems in an X-ray detection camera according to a comparative example.
FIG. 9 is a view describing problems in an X-ray detection camera according to a comparative example.
FIG. 10 is a configuration diagram of an X-ray inspection apparatus according to a second embodiment.
FIG. 11 is a diagram for explaining the shape of the detection object illustrated in FIG. 10.
FIG. 12 is a diagram for explaining the thickness of the detection object illustrated in FIG. 10.
FIG. 13 is a diagram for explaining functions of a determination unit and a voltage control unit.
FIG. 14 is a diagram for explaining a distance between inspection objects in the X-ray inspection apparatus.
FIG. 15 is a diagram for explaining a distance between inspection objects in a plurality of radiation detection elements according to a modified example.
FIG. 16 is a diagram for explaining the operation of the X-ray detection camera according to the modified example.
FIG. 17 is a configuration diagram of an X-ray inspection apparatus according to an example.

### Description of Embodiments

Hereinafter, embodiments of the present invention will be described in detail with reference to the drawings. In the drawings, the same or corresponding parts are denoted by the same reference signs, and redundant description will be omitted.

### [First Embodiment]

### [Configuration of X-ray Inspection Apparatus]

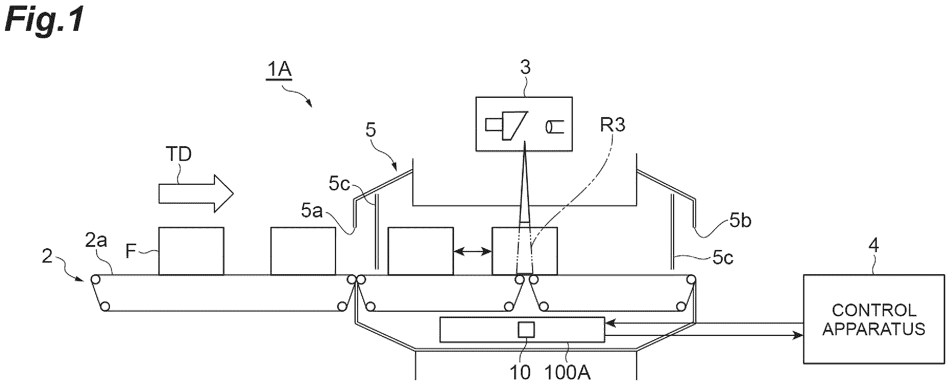

FIG. 1 is a configuration diagram of an X-ray inspection apparatus 1A which is a radiation detection system according to a first embodiment. As illustrated in FIG. 1, an X-ray inspection apparatus 1A is an apparatus that irradiates an inspection object (object) F conveyed in a conveyance direction TD with an X-ray (radiation) and acquires an X-ray image obtained by imaging the inspection object F based on the X-ray transmitted through the inspection object F. The X-ray inspection apparatus 1A executes foreign matter inspection, weight inspection, inspection, and the like targeting on the inspection object F using the X-ray image. Examples of the application of the X-ray inspection apparatus 1A include food inspection, baggage inspection, substrate inspection, battery inspection, material inspection, and the like. The X-ray inspection apparatus 1A includes a conveyance unit (conveyance apparatus) 2 that conveys the inspection object F, an X-ray generator (light source) 3 that emits an X-ray, an X-ray detection camera 100A, a control apparatus 4, and a shielding portion 5 that shields the X-ray. Note that the radiation in the present invention is not limited to X-rays, and includes radiation other than X-rays such as γ-rays. In the present embodiment, description will be made assuming that the radiation is an X-ray.

The conveyance unit 2 conveys the inspection object F so that the inspection object F passes through an irradiation region R₃ irradiated with the X-ray by the X-ray generator 3. The conveyance unit 2 includes a belt 2a on which the inspection object F is placed. In the conveyance unit 2, the belt 2a is moved in the conveyance direction TD, so that the inspection object F is conveyed in the conveyance direction TD at a predetermined conveyance speed. A plurality of inspection objects F are placed on the belt 2a at predetermined intervals. Each inspection object F is sequentially conveyed to the irradiation region R₃ as the belt 2a moves. Note that the inspection object F conveyed by the conveyance unit 2 includes various articles such as, for example, food such as meat, fish and shellfish, agricultural products, and confectionery, rubber products such as tires, resin products, metal products, resource materials such as minerals, wastes, electronic components, and electronic substrates.

The X-ray generator 3 is a apparatus that emits (outputs) X-rays. The X-ray generator 3 irradiates at least the conveyance unit 2 with an X-ray. Specifically, the X-ray generator 3 is, for example, a point light source, and diffuses and emits the X-ray in a constant irradiation direction (predetermined angular range). The X-ray generator 3 is provided such that the irradiation direction is on the conveyance unit 2 side. The X-ray generator 3 is provided above the conveyance unit 2 so as to be separated from the conveyance unit 2 by a predetermined distance. The X-ray generator 3 is provided such that the X-ray irradiation region R₃ extends over the entire width direction (direction intersecting the conveyance direction TD) of the inspection object F. In the X-ray generator 3, a predetermined division range in the length direction is set as the irradiation region R₃ in the length direction (conveyance direction TD) of the inspection object F. In the X-ray inspection apparatus 1A, the inspection object F is conveyed by the conveyance unit 2, and the entire inspection object F is passed through the irradiation region R₃ of the X-ray generator 3, so that the inspection object F is irradiated with the X-ray over the entire length direction. In the X-ray generator 3, for example, the tube voltage and the tube current are set by the control apparatus 4. The X-ray generator 3 irradiates the conveyance unit 2 with X-rays having predetermined energy and radiation dose according to the set tube voltage and tube current.

The X-ray detection camera 100A detects an X-ray transmitted through at least the conveyance unit 2 among the X-rays emitted toward the conveyance unit 2 by the X-ray generator 3, and outputs X-ray image data based on the X-ray. The X-ray detection camera (radiation detection apparatus) 100A is, for example, an X-ray flat panel sensor or an X-ray line sensor camera, and includes a radiation detection element (detection element) 10 having at least one row of pixel lines in which a plurality of pixels are arrayed along the pixel array direction. The radiation detection element 10 is a direct conversion type radiation detection element that directly converts incident X-rays into electric charges. The X-ray detection camera 100A generates X-ray image data based on the detected X-rays, and outputs the generated X-ray image data to the control apparatus 4. Note that the radiation detection element 10 of the X-ray detection camera 100A may be a one-dimensional sensor (single-line sensor) in which the pixel lines are in a line, or may be a two-dimensional sensor having a plurality of pixel lines. The two-dimensional sensor may be an area scanning type two-dimensional sensor. Furthermore, a line scanning type two-dimensional sensor such as a multi-line sensor configured by a plurality of pixel lines or a time delay integration (TDI) sensor may be used.

The control apparatus 4 is, for example, a computer such as a personal computer (PC). The control apparatus 4 is electrically coupled to the X-ray detection camera 100A. The control apparatus 4 controls the X-ray detection camera 100A to repeatedly perform imaging at a predetermined detection cycle. When the radiation detection element 10 of the X-ray detection camera 100A has a plurality of pixel lines, the control apparatus 4 sets a predetermined detection cycle so that each of the plurality of pixel lines can image an X-ray transmitted through the same region of the inspection object F. The control apparatus 4 generates an X-ray image based on the X-ray image data output from the X-ray detection camera 100A. For example, the control apparatus 4 generates one X-ray image by connecting the X-ray image data for each pixel line output from the X-ray detection camera 100A. Furthermore, the control apparatus 4 may generate one X-ray image by performing averaging process or addition process on the X-ray image data for each pixel line output from the X-ray detection camera 100A. Note that the control apparatus 4 may be a apparatus independently provided outside the X-ray detection camera 100A or may be integrated inside the X-ray detection camera 100A.

The predetermined detection cycle may be set based on, for example, at least one of a distance between a plurality of pixel lines of the radiation detection element 10, a distance between the X-ray generator 3 and the inspection object F on the conveyance unit 2 (focus object distance (FOD): inter-line source object distance), and a distance between the X-ray generator 3 and the radiation detection element 10 (focus detector distance (FDD): inter-line source sensor distance). In addition, the predetermined detection cycle may be individually set based on the pixel width in the direction orthogonal to the pixel array direction of the pixels constituting the pixel line of the radiation detection element 10. In this case, the deviation (delay time) of the detection cycle between the plurality of pixel lines may be specified according to the distance between the plurality of pixel lines, the conveyance speed of the conveyance unit 2, the distance (FOD) between the X-ray generator 3 and the inspection object F on the conveyance unit 2, and the distance (FDD) between the X-ray generator 3 and the radiation detection element 10, and the individual cycles may be respectively set.

The shielding portion 5 prevents the X-ray emitted from the X-ray generator 3 from leaking to the outside of the X-ray inspection apparatus 1A. The shielding portion 5 is provided so as to surround the periphery of the irradiation region R₃ of the X-ray generator 3. The shielding portion 5 are formed with a carry-in port 5a and a carry-out port 5b through which the conveyance unit 2 and the inspection object F conveyed by the conveyance unit 2 pass. The carry-in port 5a is formed on the upstream side of the irradiation region R₃ of the X-ray generator 3 in the conveyance unit 2. The carry-out port 5b is formed on the downstream side of the irradiation region R₃ of the X-ray generator 3 in the conveyance unit 2. In the X-ray inspection apparatus 1A, the inspection object F conveyed by the conveyance unit 2 passes through the carry-in port 5a, the irradiation region R₃ of the X-ray generator 3, and the carry-out port 5b in this order. The shielding curtain 5c is provided between the irradiation region R₃ and the regions of the carry-in port 5a and the carry-out port 5b so as to partition the irradiation region R₃ and the regions of the carry-in port 5a and the carry-out port 5b, and suppresses the X-ray from leaking to the outside of the X-ray inspection apparatus 1A.

### [Configuration of X-ray Detection Camera]

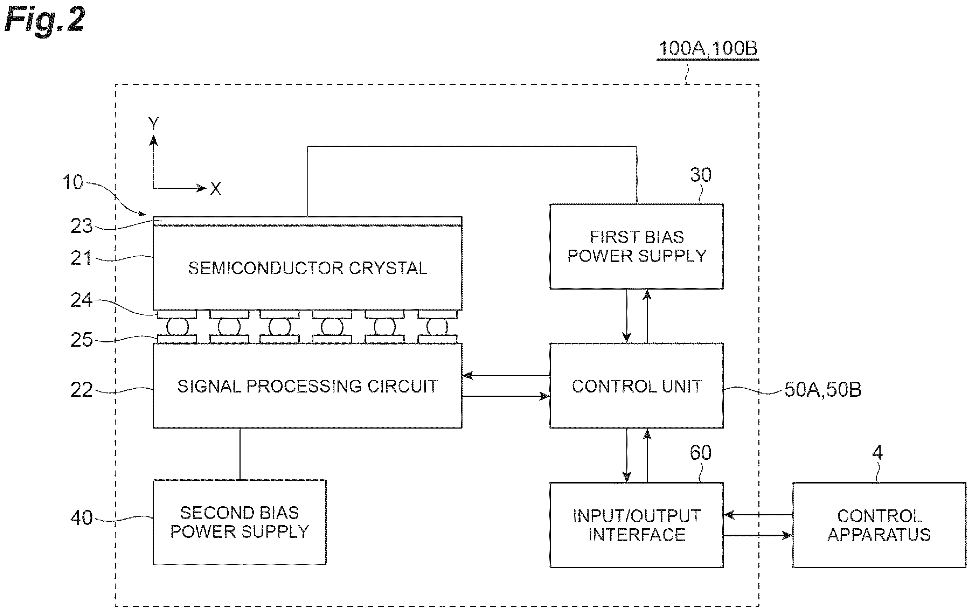

FIG. 2 is a configuration diagram of the X-ray detection camera 100A. As illustrated in FIG. 2, the X-ray detection camera 100A includes a radiation detection element (detection element) 10, a first bias power supply 30 (voltage source), a second bias power supply 40, a control unit 50A, and an input/output interface 60.

The radiation detection element 10 is a detection element that directly converts incident X-rays into electric charges, and outputs a result of collecting electric charges for each of the plurality of pixel electrodes as X-ray image data (imaged image data). The radiation detection element 10 continuously outputs the X-ray image data. The radiation detection element 10 is operated by the control unit 50A based on a reference clock (described later). The radiation detection element 10 includes a semiconductor crystal 21, a signal processing circuit 22, a first electrode 23, a plurality of second electrodes 24, and a plurality of third electrodes 25. Hereinafter, in the radiation detection element 10, a direction in which the semiconductor crystal 21 and the signal processing circuit 22 are extended is referred to as an X direction, and a direction in which the semiconductor crystal 21 and the signal processing circuit 22 are arranged is referred to as a Y direction.

The first electrode (bias electrode) 23 is provided on a surface of the semiconductor crystal 21 opposite to the side facing the signal processing circuit 22. The first electrode 23 extends along the X direction which is the pixel array direction, and is integrally configured without being divided. The plurality of second electrodes (pixel electrodes) 24 are provided on a surface of the semiconductor crystal 21 on a side facing the signal processing circuit 22. The plurality of second electrodes 24 are arranged along the X direction. The plurality of third electrodes (pixel electrodes) 25 are provided on a surface of the signal processing circuit 22 on a side facing the semiconductor crystal 21. The plurality of third electrodes 25 are arranged along the X direction. Each of the third electrodes 25 corresponds to each of the second electrodes 24 (arranged to face each other in the Y direction), and is electrically coupled to the corresponding second electrode 24.

The semiconductor crystal 21 is a semiconductor crystal that directly converts incident X-rays into electric charges. The semiconductor crystal 21 is made of, for example, a semiconductor crystal such as cadmium telluride (Cadotel) (CdTe), zinc cadmium telluride (CdZnTe), thallium bromide (TlBr), or the like. When a bias voltage is applied from the first bias power supply 30 to the radiation detection element 10, electric charges generated in the semiconductor crystal 21 linearly advance to the second electrode 24 along the Y direction. As a result, the electric charges generated immediately above each of the second electrodes 24 reaches the second electrode 24 located immediately below. The electric charges that have reached the second electrode 24 are collected by the third electrode 25 corresponding to the second electrode 24.

The signal processing circuit 22 is, for example, an application specific integrated circuit (ASIC). The signal processing circuit 22 is electrically coupled to the second electrode 24 via the third electrode 25. The signal processing circuit 22 is a circuit that reads an electric signal between the first electrode 23 and the second electrode 24, and generates X-ray image data (imaged image data) based on the read electric signal. The signal processing circuit 22 collects electric charges for each of the plurality of third electrodes 25, and outputs the collected result to the control unit 50A as X-ray image data. The signal processing circuit 22 continuously outputs the X-ray image data to the control unit 50A. Note that the X-ray image data includes a digital signal obtained by converting the voltage signal detected by the signal processing circuit 22. The X-ray image data may be the X-ray image itself or information for generating the X-ray image.

The first bias power supply 30 applies a bias voltage to the radiation detection element 10. The first bias power supply 30 is electrically coupled to the first electrode 23. The first bias power supply 30 applies a bias voltage to the radiation detection element 10 in accordance with a control signal from the control unit 50A. The first bias power supply 30 applies, for example, a high voltage (HV) to the radiation detection element 10. The first bias power supply 30 is configured to execute a reset operation (described later) on the radiation detection element 10. The second bias power supply 40 is electrically coupled to the signal processing circuit 22 and provides a power supply for operating the signal processing circuit 22. The second bias power supply 40 may be a reference potential when the first bias power supply 30 applies a bias voltage. Note that the bias voltage (ON voltage value) to be applied to the radiation detection element 10 by the first bias power supply 30 may be arbitrarily set, and is, for example, -1000 V.

The control unit 50A is electrically coupled to the signal processing circuit 22 and the first bias power supply 30. The control unit 50A includes, for example, a field-programmable gate array (FPGA). The control unit 50A controls the radiation detection element 10 by controlling the signal processing circuit 22 and the first bias power supply 30 based on a reference clock input from the outside of the X-ray detection camera 100A. Furthermore, the control unit 50A may control the radiation detection element 10 by controlling the signal processing circuit 22 and the first bias power supply 30 based on the reference clock generated in the X-ray detection camera 100A. According to any of these, the control unit 50A outputs a control signal for operating the signal processing circuit 22 to the signal processing circuit 22. The control unit 50A acquires the X-ray image data output from the signal processing circuit 22, and outputs the X-ray image data to the outside of the X-ray detection camera 100A. For example, the control unit 50A outputs the X-ray image data to the control apparatus 4 through the input/output interface 60. The control unit 50A outputs a control signal for operating the first bias power supply 30 to the first bias power supply 30. Furthermore, the control unit 50A may acquire a control signal from the control apparatus 4 via the input/output interface 60. When the X-ray image data is the information for generating the X-ray image, the control unit 50Amay generate the X-ray image based on the acquired X-ray image data.

### [Functional Configuration of Control Unit]

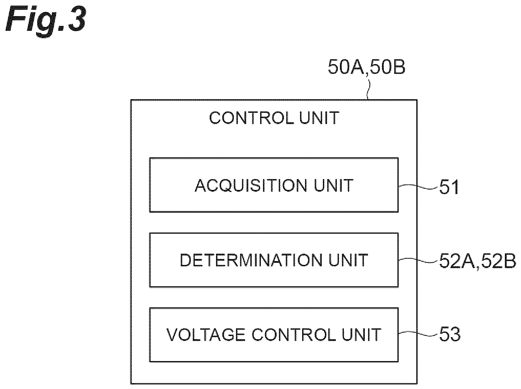

FIG. 3 is a block diagram illustrating a functional configuration of the control unit 50A. As illustrated in FIG. 3, the control unit 50Aincludes an acquisition unit 51, a determination unit 52A, and a voltage control unit 53. Hereinafter, each functional unit of the control unit 50A will be specifically described. In the control unit 50A, the luminance (background luminance) of the X-ray image data is detected, and the application of the high voltage (HV) by the first bias power supply 30 is controlled according to the detection result.

The acquisition unit 51 acquires a control signal for controlling imaging in the X-ray detection camera 100Afrom the control apparatus 4. The acquisition unit 51 outputs the acquired control signal to the signal processing circuit 22 or the first bias power supply 30. The acquisition unit 51 acquires the X-ray image data from the signal processing circuit 22. The acquisition unit 51 outputs the X-ray image data to the determination unit 52A. When the X-ray image data is the information for generating the X-ray image, the acquisition unit 51 may generate the X-ray image based on the acquired X-ray image data, and output the generated X-ray image to the determination unit 52A. Note that the acquisition unit 51 may acquire the control signal generated in the control unit 50A.

The determination unit 52A acquires the X-ray image data from the acquisition unit 51. The determination unit 52A executes a determination process of determining whether or not a reset operation is executable in the radiation detection element 10 based on the acquired X-ray image data. That is, the determination unit 52A executes the determination process based on the X-ray image data output from the radiation detection element 10.

The reset operation is an operation for eliminating a change in an internal electric field, which is a polarization phenomenon (polarization) occurring inside the semiconductor crystal 21 when the semiconductor crystal 21 is continuously irradiated with X-rays. Specifically, the reset operation is an operation of executing voltage control on the radiation detection element 10 so that electric charge is not collected in the semiconductor crystal 21. For example, the reset operation may be an operation of stopping application of a voltage to the radiation detection element 10 itself, or may be an operation of applying a reverse bias voltage (a voltage of a reverse bias to a normally applied voltage) to the radiation detection element 10. Note that the voltage (OFF voltage value) applied to the radiation detection element 10 when the first bias power supply 30 executes the reset operation may be arbitrarily set, and may be, for example, 0 V or 10 V. In addition, the period during which the reset operation is executed may be a period necessary for recovery from the polarization phenomenon in the semiconductor crystal 21. The period during which the reset operation is executed may be, for example, a fixed value, and may be, for example, 1 millisecond. Furthermore, the period during which the reset operation is executed may be changed periodically (cyclically). For example, 1 millisecond and 2 milliseconds may be alternately set as a period for executing the reset operation. Note that, when the reset operation is executed, the signal processing circuit 22 cannot collect the electric charges and thus cannot generate the X-ray image data.

Specifically, the determination unit 52A executes a determination process of determining whether or not the X-ray is transmitted through the inspection object F based on the X-ray image data. More specifically, the determination unit 52A executes the determination process of determining whether or not the luminance value in the X-ray image data exceeds a predetermined threshold value. When the luminance value in the X-ray image data exceeds the predetermined threshold value in the determination process, the determination unit 52A determines that the X-ray entering the radiation detection element 10 is not transmitted through the inspection object F. When determining that the X-ray is not transmitted through the inspection object F based on the X-ray image data in the determination process, the determination unit 52A determines that the reset operation is executable. The determination unit 52A outputs the result of execution of the determination process to the voltage control unit 53. Note that a case in which "the X-ray (radiation) is not transmitted through the inspection object F (object)" is ae case in which "the inspection object F does not exist in the irradiation region R₃". Furthermore, the predetermined threshold value merely needs to be higher than the luminance in the X-ray image data of when the inspection object F exists in the irradiation region R₃. Moreover, the predetermined threshold value may be lower than the luminance in the X-ray image data of when the inspection object F does not exist in the irradiation region R₃. The predetermined threshold value may be set in advance in the control unit 50A.

In a case where the reset operation is executed by the voltage control unit 53, the determination unit 52A may not execute a new determination process until a predetermined period elapses thereafter. In this case, the determination unit 52A executes a new determination process when the predetermined period has elapsed. The predetermined period is a period in which the reset operation is unnecessary. The period in which the reset operation is unnecessary is a period in which the above-described polarization phenomenon does not become a problem after the reset operation. As described above, the X-ray image data cannot be generated during the reset operation. Therefore, it is preferable that the reset operation is executed to the minimum necessary. The X-ray image data can be more appropriately generated by appropriately setting and managing the period in which the reset operation is unnecessary. The determination unit 52A may determine whether or not the predetermined period has elapsed by counting the reference clock. In this case, the determination unit 52A may start to execute the determination process when determining that the predetermined period has elapsed.

The determination unit 52A may manage a predetermined period (a period during which the reset operation is unnecessary) by setting a flag. The flag here is that which records that the reset operation has been executed. For example, the determination unit 52A may set a flag (flag: 1) when the reset operation is executed, and may release the flag (flag: 0), for example, when imaging of a new inspection object F is started (timing when the luminance value of the X-ray image data falls below a predetermined threshold value). With such flag management, it is possible to realize control not to execute the reset operation while the flag is on.

When the determination unit 52A determines that the reset operation is executable, the voltage control unit 53 controls the first bias power supply 30 to execute the reset operation. Note that an arbitrary delay time may be provided between the determination process by the determination unit 52A and the execution of the reset operation by the voltage control unit 53. This delay time is, for example, a processing time in the X-ray detection camera 100A.

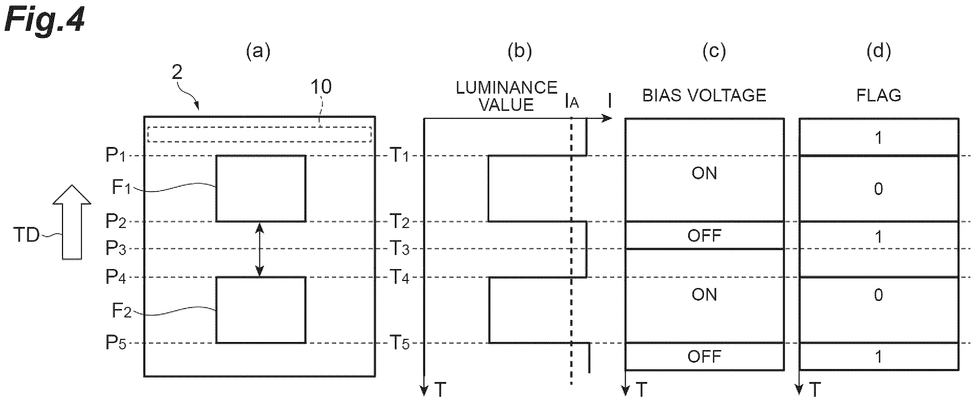

The functions of the determination unit 52A and the voltage control unit 53 will be described in more detail with reference to the example illustrated in FIG. 4. FIG. 4(a) is a diagram illustrating the conveyance unit 2 that conveys the inspection object F in the conveyance direction TD, and the radiation detection element 10 provided on the surface of the conveyance unit 2 on the side opposite to the surface on the side facing the inspection object F. Furthermore, FIG. 4 is a diagram illustrating (b) the luminance value I of the X-ray image data generated by the radiation detection element 10, (c) whether the bias voltage applied to the radiation detection element 10 by the first bias power supply 30 is ON or OFF, and (d) the state of the flag, when each of the positions P₁ to P₅ of the belt 2a passes immediately above the radiation detection element 10 in the conveyance unit 2. The vertical axes in FIGs. 4(b) to 4(d) indicate time, and indicate times T₁ to T₅ at which the respective positions P₁ to P₅ of the belt 2a pass immediately above the radiation detection element 10. The horizontal axis in FIG. 4(b) indicates the luminance value I in the X-ray image data. In the following description and FIG. 4, the width of the radiation detection element 10 along the conveyance direction TD is not considered for the sake of simplifying the description.

As a premise, immediately before the position P₁ passes immediately above the radiation detection element 10, a bias voltage is supplied from the first bias power supply 30 to the radiation detection element 10 (bias voltage: ON), and a predetermined period has not elapsed since the reset operation was executed immediately before (flag: 1). As described above, the determination unit 52A does not execute the determination process of determining whether or not the luminance value I in the X-ray image data image has exceeded the predetermined threshold value I_{A} in the period in which the flag is on (flag: 1).

First, at time T₁ when the position P₁ passes immediately above the radiation detection element 10, the inspection object F₁ starts to pass immediately above the radiation detection element 10. In the example illustrated in FIG. 4, at time T₁, the luminance value of the X-ray image data decreases and falls below the predetermined threshold value I_{A}. In this case, the determination unit 52A determines that the predetermined period has elapsed and releases the flag (flag: 0). The flag may be released based on information other than the change in the luminance value of the X-ray image data. For example, the predetermined period may be set to match the time T₁ at which the position P₁ passes immediately above the radiation detection element 10 (the timing at which the luminance value of the X-ray image data decreases and falls below the predetermined threshold value I_{A}) in consideration of the conveyance interval of the inspection object F₁, and the flag may be released at the timing when the predetermined period has elapsed. The determination unit 52A executes the determination process periodically while the flag is released.

Next, at time T₂ when the position P₂ passes immediately above the radiation detection element 10, the inspection object F₁ finishes passing immediately above the radiation detection element 10. At this time, the luminance value I of the X-ray image data increases and exceeds the predetermined threshold value I_{A}. Therefore, the determination unit 52A determines that the X-ray entering the radiation detection element 10 is not transmitted through the inspection object F, and the reset operation can be executed. The voltage control unit 53 controls the first bias power supply 30 to execute the reset operation which is an operation (bias voltage: OFF) of stopping the application of the voltage to the radiation detection element 10. The determination unit 52A sets a flag to record that the reset operation has been executed (flag: 1). That is, the voltage control unit 53 turns OFF the first bias power supply 30 at the timing the determination unit 52A detects that the luminance of the X-ray image data has exceeded the predetermined threshold value. Note that an arbitrary delay time may be provided before the timing at which the first bias power supply 30 is controlled by the voltage control unit 53 and the reset operation is executed with respect to the timing of the determination process by the determination unit 52A.

Subsequently, at time T₃ when the position P₃ passes immediately above the radiation detection element 10, the voltage control unit 53 ends the reset operation and controls the first bias power supply 30 to apply a bias voltage to the radiation detection element 10 (bias voltage: ON). That is, the voltage control unit 53 restarts the first bias power supply 30.

Then, at time T₄ when the position P₄ passes immediately above the radiation detection element 10, the inspection object F₂ starts to pass immediately above the radiation detection element 10. In the example illustrated in FIG. 4, at time T₄, the luminance value of the X-ray image data decreases and falls below the predetermined threshold value I_{A}. In this case, the determination unit 52A releases the flag (flag: 0).

Finally, at time T₅ when the position P₅ passes immediately above the radiation detection element 10, the inspection object F₂ finishes passing immediately above the radiation detection element 10. At this time, the luminance value I of the X-ray image data increases and exceeds the predetermined threshold value I_{A}. Therefore, the determination unit 52A determines that the reset operation can be executed similarly to time T₂. The voltage control unit 53 controls the first bias power supply 30 to execute the reset operation. The determination unit 52A sets a flag to record that the reset operation has been executed (flag: 1).

As a premise of the control, the inspection object F and the inspection object F are separated by greater than or equal to a total distance the width of the radiation detection element 10 along the conveyance direction TD and a distance obtained by multiplying the time required for the reset operation by the conveyance speed of the conveyance unit 2. The X-ray detection camera 100A may include only one radiation detection element 10. That is, only one line of the sensor that exposes the X-ray may be provided in the X-ray detection camera 100A.

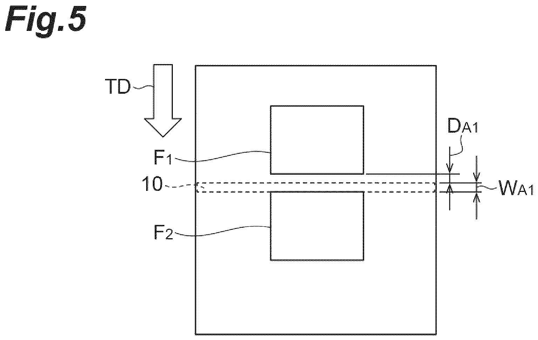

FIG. 5 is a schematic view illustrating the conveyance unit 2 that conveys the inspection objects F₁ and F₂. FIG. 5 illustrates the moment when the inspection object F₂ has finished passing immediately above the radiation detection element 10. In the example illustrated in FIG. 5, in the radiation detection element 10, the first bias power supply 30 starts a reset operation. At this time, unless the reset operation is completed before the inspection object F₁ starts to pass immediately above the radiation detection element 10, the radiation detection element 10 cannot image the X-ray transmitted through the inspection object F₁. Therefore, the inspection object F₁ and the inspection object F₂ are separated by greater than or equal to a total distance of the width W_{A1} of the radiation detection element 10 along the conveyance direction TD and the distance D_{A1} obtained by multiplying the time required for the reset operation by the conveyance speed of the conveyance unit 2.

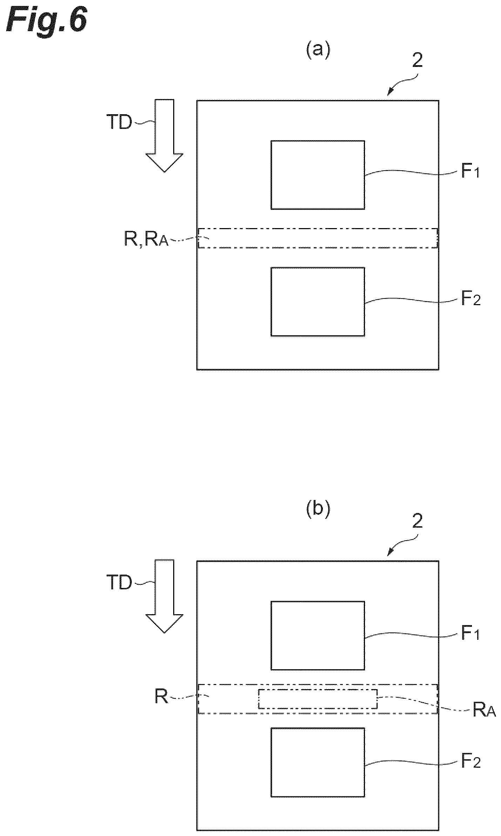

In addition, the determination region used for the determination process in the determination unit 52A may include a portion of the detection region in which the radiation detection element 10 can detect the X-ray. FIG. 6 is a schematic diagram illustrating a determination region R_{A} used for the determination process in the determination unit 52A. As illustrated in FIG. 6(a), the determination region R_{A} may be the entire detection region R (the entire visual field of the X-ray detection camera 100A). In this case, the luminance value in the determination region R_{A} may be, for example, a maximum value of the luminance values of the entire determination region R_{A}, or may be at least one of a minimum value, an average value, a median value, and the like of the luminance values of the entire determination region R_{A}. As illustrated in FIG. 6(b), the determination region R_{A} may be a portion of the detection region R (only a part of the visual field of the X-ray detection camera 100A). The determination region R_{A} is designated in advance by at least one of the determination unit 52A, the control apparatus 4, the user, and the like. Note that since the determination region R_{A} merely needs to be a portion of the detection region R, the determination region R_{A} may be configured by a plurality of regions that are not continuous with each other.

The radiation detection element 10 has a width along the conveyance direction TD. In this case, the "time point at which the inspection object F starts to pass immediately above the radiation detection element 10" to the "time point at which the inspection object F finishes passing immediately above the radiation detection element 10" is a period in which the inspection object F conveyed in the conveyance direction TD includes the entire length along the conveyance direction TD of the radiation detection element 10 when viewed from the X-ray generator 3.

Furthermore, the determination unit 52A may determine non-execution/execution of the determination process by the elapse of the predetermined period and a trigger other than the flag described above. For example, after the reset operation is executed, the determination unit 52A may not perform the determination process until the change amount of the luminance value among the plurality of X-ray image data continuously output from the radiation detection element 10 exceeds the predetermined threshold value, and may perform the determination process when the change amount of the luminance value exceeds the predetermined threshold value. Note that when the X-ray image data is the information for generating the X-ray image, the determination unit 52A may perform the determination process on the change amount of the luminance value between the X-ray images generated based on the X-ray image data.

In the first embodiment, after the reset operation is executed, the determination unit 52A may not perform the determination process until the rising edge is detected with respect to the displacement of the luminance value of the X-ray image data, and may perform the determination process when the rising edge is detected. Furthermore, the determination unit 52A may execute the determination process when a falling edge is detected.

The rising edge is a portion where the luminance value rises (increases) sharply in the graph in which the vertical axis indicates the luminance value and the horizontal axis indicates time. In the rising edge, a change amount of the luminance value within a minute time exceeds a predetermined threshold value. The minute time is a time sufficiently smaller than the time required for the inspection object F to pass immediately above the radiation detection element 10. Note that the falling edge to be described later is a portion where the luminance value falls (decreases) sharply in the graph.

In the example illustrated in FIG. 4, the determination unit 52A does not execute the determination process because the luminance value does not rise sharply in the period from after the execution of the reset operation at time T₂ to immediately before time T₅. When the luminance value I of the X-ray image data rises sharply at time T₅, the determination unit 52A executes the determination process assuming that the rising edge is detected in the displacement of the luminance value of the X-ray image data. When the luminance value I of the X-ray image data falls sharply at time T₄, the determination unit 52A executes the determination process assuming that the falling edge is detected in the displacement of the luminance value of the X-ray image data. In a case where the rising edge and the falling edge are detected, it is not necessary to manage the flag described above.

Furthermore, the determination unit 52A releases the flag when the luminance value I of the X-ray image data falls below the predetermined threshold value I_{A}, but the present invention is not limited thereto. For example, the determination unit 52A may release the flag when falling below a threshold value different from the threshold value I_{A}.

Furthermore, the determination unit 52A may always execute the determination process. In this case, the reset operation may be executed only when a predetermined period in which the reset operation is unnecessary has elapsed and the determination unit 52A determines that the reset operation is executable.

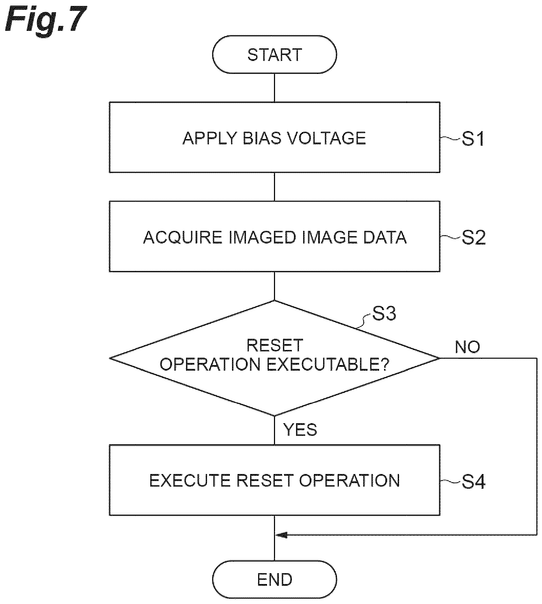

FIG. 7 is a flowchart illustrating a process for executing a reset operation of the radiation detection method executed by the X-ray inspection apparatus 1A. As illustrated in FIG. 7, first, the voltage control unit 53 controls the first bias power supply 30 to apply a bias voltage to the radiation detection element 10 (step S1: voltage application step). Then, the acquisition unit 51 acquires the X-ray image data from the radiation detection element 10 (step S2: acquisition step). Subsequently, the determination unit 52A determines whether or not the reset operation is executable based on the X-ray image data (step S3: determination step). When it is determined that the reset operation is executable (step S3: YES), the voltage control unit 53 controls the first bias power supply 30 to execute the reset operation (step S4: reset step). When it is determined that the reset operation is not executable (step S3: NO) and when the reset operation is executed (step S4), the above process is ended.

Hereinafter, the background art and the comparative example will be described in detail, and operations and effects of the X-ray inspection apparatus 1A, the X-ray detection camera 100A, and the radiation detection method according to the first embodiment will be described.

Conventionally, CdTe, CdZnTe, and the like are used as materials used for a direct conversion type radiation detection element such as a non-destructive counting detector. In such a direct conversion type radiation detection element, electric charges generated by conversion from the X-rays can be collected in an electrode of a signal processing circuit when a high voltage (HV) is applied. However, in the direct conversion type radiation detection element, when the X-ray is continuously emitted, a change called a polarization phenomenon occurs in the internal electric field, and the X-ray image data output from the radiation detection element is deteriorated.

In order to prevent the deterioration of the X-ray image data as described above, in the radiation detection apparatus described in Patent Literatures 1 to 3, the application voltage is temporarily turned OFF with respect to the direct conversion type radiation detection element, so that the direct conversion type radiation detection element is recovered from the polarization phenomenon.

In addition, it is conceivable to periodically turn OFF the application voltage in order to prevent deterioration of the X-ray image data as described above. For example, in the X-ray detection camera according to the comparative example, it is conceivable to periodically provide a period (hereinafter described as "dead time") for turning OFF the application voltage to the direct conversion type radiation detection element with a time obtained by multiplying the imaging cycle (line rate) of the plurality of line sensors included in the camera by the number of line sensors (number of stages) as one cycle. Since the dead time is a time until the polarization phenomenon in the direct conversion type radiation detection element is recovered, the dead time is a time of a certain length. In addition, in the dead time, the direct conversion type radiation detection element cannot output the X-ray image data.

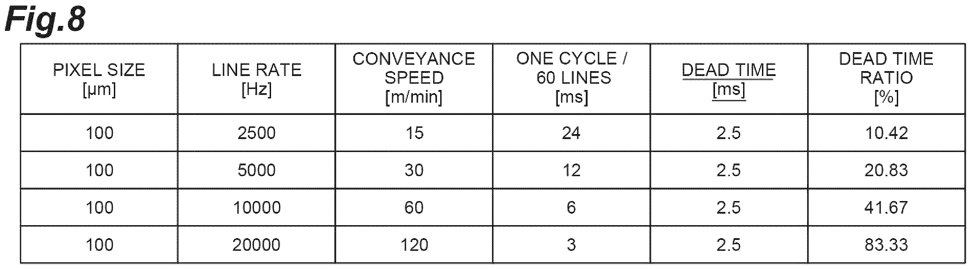

The X-ray detection camera according to the comparative example has two problems. The first problem is that, in the X-ray detection camera according to the comparative example, as the time (hereinafter referred to as "exposure time") during which the direct conversion type radiation detection element exposes the X-ray becomes shorter (the line rate increases), the dead time ratio, which is the ratio of the dead time with respect to the exposure time, increases, and thus the sensitivity of the direct conversion type radiation detection element lowers. FIG. 8 is a table illustrating a change in the dead time ratio when the conveyance speed is changed. In the example illustrated in FIG. 8, 60 lines, each having a pixel size of 100 µm, are arranged. When the conveyance speed increases, the line rate increases and the exposure time per cycle decreases. At this time, the length of the dead time is constant, and thus the dead time ratio increases. As the image quality (signal noise ratio (SNR)) of the X-ray detection camera depends on the dose of the X-ray to be imaged, an increase in the dead time ratio leads to degradation in the image quality of the X-ray detection camera.

In the X-ray camera according to the comparative example, in order to suppress the degradation of the image quality of the X-ray detection camera due to the decrease of the dead time ratio, it is conceivable to increase the dose of the X-ray entering the X-ray detection camera while the X-ray detection camera performs imaging. In this case, for example, a method of increasing the dose of the X-ray emitted per unit time is considered. However, considering the limit of the dose that can be irradiated by the X-ray source, the allowable dose of the subject, the dose leaking from the apparatus, and the like, there is a limit to increase in the dose. Furthermore, for example, it is conceivable that the X-ray detection camera performs imaging at a lower speed. However, the inspection speed of the inspection object decreases, and the convenience of the user is impaired.

The second problem is that, in the X-ray detection camera according to the comparative example, the parallax occurs in the output image obtained by performing the addition process on the plurality of X-ray image data, the parallax between the addition processed X-ray image data groups.

Normally, in the X-ray detection camera, the X-ray image data is continuously output from each direct conversion type radiation detection element in a period in which the inspection object passes through the imaging region of the camera. The output image is generated by performing the addition process on the X-ray image data. At this time, since the X-ray image data from all the direct conversion type radiation detection elements are addition processed at each position in the output image, parallax between the addition processed X-ray image data groups does not occur.

However, in the X-ray detection camera according to the comparative example, since the application voltage to each direct conversion type radiation detection element is periodically turned OFF, dead time is generated in the period in which the inspection object passes through the imaging region of the camera. Therefore, the addition process is executed in a state where the X-ray image data that should have been output by each direct conversion type radiation detection element in the dead time is missing. At this time, since the X-ray image data from some of the direct conversion type radiation detection elements is not subjected to the addition process at each position in the output image, parallax between the addition processed X-ray image data groups occurs.

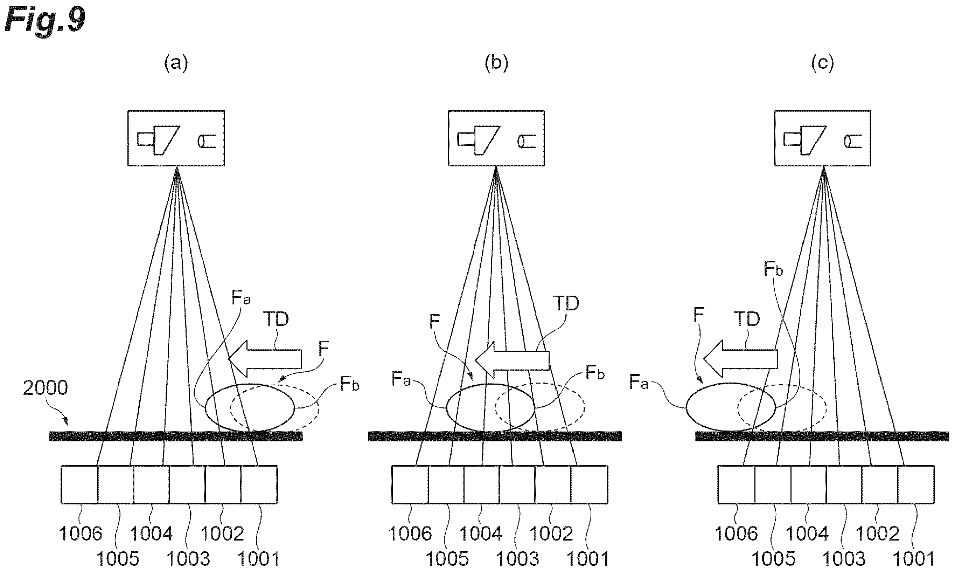

FIG. 9 is a schematic view illustrating the inspection object F conveyed on the conveyance unit 2000. In FIGs. 9(a) and 9(c), each line sensor 1001 to 1006 of the X-ray detection camera 1000 is in a state capable of exposing the X-ray and outputting the X-ray image data, and in FIG. 9(b), each line sensor 1001 to 1006 is in a dead time. As described above, when the imaging is cyclically turned OFF, in the example illustrated in FIG. 9, the front end Fₐ of the inspection object F is imaged by the line sensors 1001 and 1002 in FIG. 9(a), and is imaged by the line sensor 1006 in FIG. 9(c). The back end F_{b} of the inspection object F is imaged by the line sensors 1004 to 1006 in FIG. 9(c). In this case, in the output image after the addition process, the line sensor of the output source of the addition processed X-ray image data is different between the portion in which the front end Fₐ appears and the portion in which the back end F_{b} appears. As described above, in the output image after the addition process, the parallax between the addition processed X-ray image data groups occurs.

In contrast to the comparative example, in the X-ray detection camera 100A according to the first embodiment, determination is made on whether or not a reset operation for executing voltage control on the radiation detection element 10 so that electric charge is not collected by the radiation detection element 10 can be executed based on the X-ray image data output from the radiation detection element 10. According to such a configuration, determination is made on whether or not the reset operation is executable in consideration of the information indicated in the X-ray image data output from the radiation detection element 10, that is, the situation outside the X-ray detection camera 100A. Thus, for example, it is possible to determine whether or not the X-ray entering the X-ray detection camera 100A is transmitted through the inspection object F based on the X-ray image data. As a result, for example, the first bias power supply 30 can execute the reset operation at the timing when the X-ray entering the X-ray detection camera 100A is not transmitted through the inspection object F, and the first bias power supply 30 can execute the voltage control on the radiation detection element 10 so that the electric charge is collected by the X-ray detection camera 100A at the timing when the X-ray entering the X-ray detection camera 100A is transmitted through the inspection object F. As a result, the occurrence of the polarization phenomenon in the radiation detection element 10 can be suppressed, and the X-ray can be more reliably detected when the X-ray entering the X-ray detection camera 100A is transmitted through the inspection object F.

As described above, in the X-ray detection camera 100A, ON and OFF (High Voltage Reset) of the application of the bias voltage are appropriately controlled, so that the generation of the dead time in the X-ray detection camera 100A can be suppressed in the inspection of the inspection object F, and highly sensitive inspection can be realized. In addition, it is possible to suppress deterioration of the image quality of the X-ray image data output from the X-ray detection camera 100A while maintaining the convenience of the user. Furthermore, the configuration using the X-ray detection camera 100A is not the configuration in which the imaging is cyclically turned OFF as in the comparative example in FIG. 9, and the imaging is continuously executed at the timing when the X-ray transmits through the inspection object F, so that the generation of the parallax between the addition processed X-ray image data groups is suppressed in one X-ray image obtained by adding the plurality of X-ray image data output from the X-ray detection camera 100A.

In the X-ray detection camera 100A of the first embodiment, the determination unit 52A determines that the reset operation is executable when the determination unit determines that the X-ray is not transmitted through the inspection object F based on the X-ray image data in the determination process. According to such a configuration, the reset operation is executed by the first bias power supply 30 at the timing when the X-ray entering the X-ray detection camera 100A is not transmitted through the inspection object F, and the voltage control on the radiation detection element 10 can be performed by the first bias power supply 30 such that the electric charge is collected by the X-ray detection camera 100A at the timing when the X-ray incident entering the X-ray detection camera 100A is transmitted through the inspection object F. As a result, the occurrence of the polarization phenomenon in the radiation detection element 10 can be suppressed, and the X-ray can be more reliably detected when the X-ray entering the X-ray detection camera 100A is transmitted through the inspection object F.

In the X-ray detection camera 100A of the first embodiment, the determination unit 52A determines that the X-ray is not transmitted through the inspection object F when the luminance value in the X-ray image data exceeds the predetermined threshold value in the determination process. According to such a configuration, it is possible to more reliably determine whether or not the X-ray entering the X-ray detection camera 100A is transmitted through the inspection object F. As a result, the reset operation is more reliably executed at the timing when the X-ray entering the X-ray detection camera 100A is not transmitted through the inspection object F.

In the X-ray detection camera 100A according to the first embodiment, the radiation detection element 10 continuously outputs the X-ray image data. After the reset operation is executed, the determination unit 52A may not perform the determination process until the change amount of the luminance value among the plurality of X-ray image data continuously output from the radiation detection element 10 exceeds the predetermined threshold value, and may perform the determination process when the change amount exceeds the predetermined threshold value. According to such a configuration, after the reset operation is executed, the determination process is restarted only after the imaging of the inspection object F by the X-ray detection camera 100A is finished. In the first embodiment, the determination unit 52A executes the determination process when the rising edge is detected in the displacement of the luminance value of the X-ray image data after the reset operation is executed. Thus, it is possible to suppress the execution of the reset operation until it is necessary to eliminate the polarization phenomenon again in the X-ray detection camera 100A after the reset operation is executed. As a result, the X-ray detection camera 100A can be operated more efficiently.

In the X-ray detection camera 100A of the first embodiment, the determination unit 52A does not perform the determination process until the predetermined period, which is the period in which the reset operation is unnecessary, has elapsed after the reset operation is performed, and performs the determination process when the predetermined period has elapsed. According to such a configuration, it is possible to suppress the execution of the reset operation until it is necessary to eliminate the polarization phenomenon again in the X-ray detection camera 100A after the reset operation is executed. As a result, the X-ray detection camera 100A can be operated more efficiently.

In the X-ray detection camera 100A according to the first embodiment, the radiation detection element 10 operates based on the reference clock. The determination unit 52A may determine whether or not the predetermined period has elapsed by counting the reference clock. According to such a configuration, it is possible to more accurately determine whether or not the predetermined time has elapsed based on the reference clock. As a result, it is possible to more reliably suppress the execution of the reset operation until it is necessary to eliminate the polarization phenomenon again in the X-ray detection camera 100A after the reset operation is executed.

In the X-ray detection camera 100A according to the first embodiment, the reset operation is either an operation of stopping the application of the voltage to the radiation detection element 10 or an operation of applying the reverse bias voltage to the radiation detection element 10. According to such a configuration, the polarization phenomenon in the X-ray detection camera 100A can be more reliably eliminated.

In the X-ray inspection apparatus 1A according to the first embodiment, the X-ray emitted from the X-ray generator 3 enters the radiation detection element 10. The inspection object F conveyed by the conveyance unit 2 passes through the X-ray irradiation region R₃. Then, based on the X-ray image data output from the radiation detection element 10, it is determined whether or not a reset operation for executing voltage control on the radiation detection element 10 so that electric charge is not collected by the radiation detection element 10 can be executed. According to such a configuration, determination is made on whether or not the reset operation is executable in consideration of the information indicated in the X-ray image data output from the radiation detection element 10, that is, the situation outside the X-ray detection camera 100A. As a result, for example, since the irradiation region R₃ of the X-ray is imaged by the radiation detection element 10, it is possible to determine whether or not the X-ray is transmitted through the inspection object F based on the X-ray image data. As a result, for example, the first bias power supply 30 can execute the reset operation at the timing when the X-ray entering the X-ray detection camera 100A is not transmitted through the inspection object F, and the first bias power supply 30 can execute the voltage control on the radiation detection element 10 so that the electric charge is collected by the radiation detection element 10 at the timing when the X-ray entering the X-ray detection camera 100A is transmitted through the inspection object F. As a result, the occurrence of the polarization phenomenon in the radiation detection element 10 can be suppressed, and the X-ray can be more reliably detected when the X-ray entering the radiation detection element 10 is transmitted through the inspection object F.

In the radiation detection method according to the first embodiment, in the determination step, it is determined whether or not a reset operation for executing voltage control on the radiation detection element 10 so that electric charge is not collected by the radiation detection element 10 can be executed based on the X image acquired in the acquisition step. According to such a configuration, determination is made on whether or not the reset operation is executable in consideration of the information indicated in the X-ray image data output from the radiation detection element 10, that is, the situation outside the X-ray detection camera 100A. Thus, for example, it is possible to determine whether or not the X-ray entering the X-ray detection camera 100A is transmitted through the inspection object F based on the X-ray image data. As a result, for example, the first bias power supply 30 can execute the reset operation at the timing when the X-ray entering the X-ray detection camera 100A is not transmitted through the inspection object F, and the first bias power supply 30 can execute the voltage control on the radiation detection element 10 so that the electric charge is collected by the radiation detection element 10 at the timing when the X-ray entering the X-ray detection camera 100A is transmitted through the inspection object F. As a result, the occurrence of the polarization phenomenon in the radiation detection element 10 can be suppressed, and the X-ray can be more reliably detected when the X-ray entering the radiation detection element 10 is transmitted through the inspection object F.

### [Second Embodiment]

### [Configuration of X-ray Inspection Apparatus]

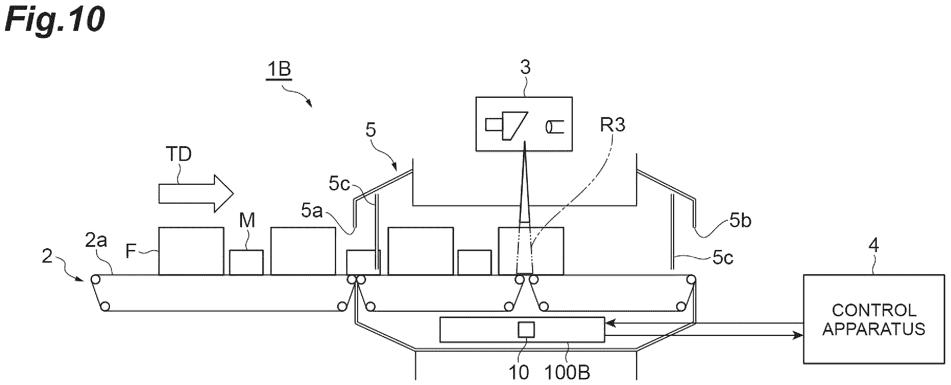

FIG. 10 is a configuration diagram illustrating an X-ray inspection apparatus 1B according to the second embodiment. As illustrated in FIG. 10, the X-ray inspection apparatus 1B according to the second embodiment is different from the X-ray inspection apparatus 1A according to the first embodiment in that an X-ray detection camera 100B is provided instead of the X-ray detection camera 100A. The X-ray detection camera 100B is different from the X-ray detection camera 100A in that the control unit 50B is provided. In the X-ray inspection apparatus 1B according to the second embodiment, unlike the X-ray inspection apparatus 1A according to the first embodiment, the detection object M is disposed among the plurality of inspection objects F.

The detection object M is disposed at a place where the inspection object F is not disposed. The detection object M is, for example, a shielding object that shields the X-ray and a dimming object that absorbs (dimms) the X-ray more significantly than the inspection object F. The detection object M is made of, for example, lead, tungsten, iron, steel, or the like. The detection object M may be provided such that a part of the detection object M is included in a part of the detection region where the X-ray can be detected.

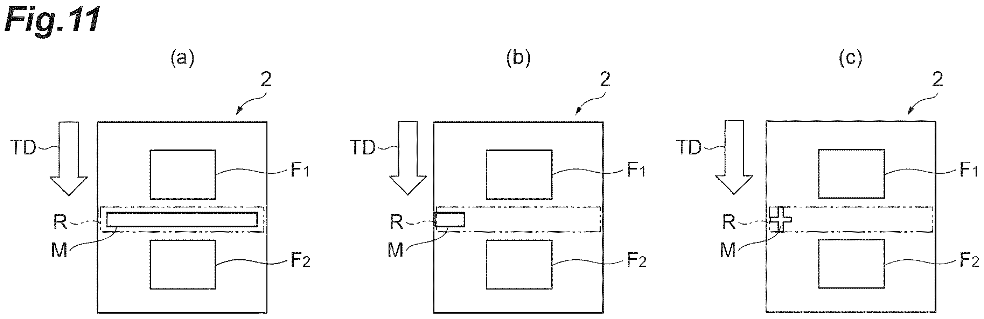

FIG. 11 is a schematic diagram illustrating an example of a shape of the detection object M. The detection object M merely needs to be disposed in a range that can be imaged by the X-ray detection camera 100B. For example, as illustrated in FIG. 11(a), the detection object M may extend over the entire detection region R (the entire visual field of the X-ray detection camera 100B). That is, the detection object M may extend over the entire width of the conveyance unit 2 along the direction intersecting the conveyance direction TD. In this case, in the X-ray image data, the luminance value of the detection object M may be, for example, a maximum value of the luminance values of the entire detection object M, or may be at least one of a minimum value, an average value, a median value, and the like of the luminance values of the entire detection object M. The detection object M may be arranged in a part of the detection region R, or may be arranged close to one side of the conveyance unit 2 in a direction intersecting the conveyance direction TD as illustrated in FIG. 11(b). Furthermore, the detection object M may include a plurality of portions that are not continuous with each other.

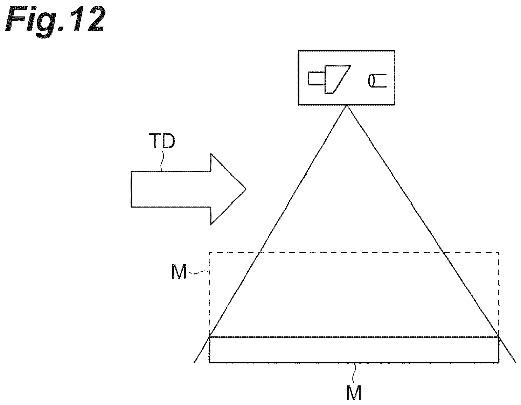

The thickness of the detection object M is not particularly limited. Specifically, in the present embodiment, the X-ray generator 3 is a point light source, and the X-ray obliquely enters the detection object M. Here, when the subject has a thickness, the X-ray transmission length of the entire subject is not uniform. At this time, even if the thickness of the subject is uniform, the luminance of the subject changes for each portion of the subject in the X-ray image. In the example illustrated in FIG. 12, the X-ray transmission length is shorter at the end portion of the detection object M having thickness than at the central portion of the detection object M, and the luminance differs between the end portion and the central portion of the detection object M in the X-ray image. Therefore, the thickness of the detection object M is preferably thinner than 50 mm. The detection object M may be thicker than 0.1 mm. In addition, when the detection object M is a shielding object, the thickness required for the detection object M varies depending on the material, density, and the like of the detection object M. The influence on the thickness of the detection object M also varies depending on the light source, the X-ray detection camera, and the optical system of the inspection object. From the above, it is preferable that the thickness of the detection object M is a thickness that exhibits sufficient shielding ability and is as thin as possible.

### [Configuration of X-ray Detection Camera]

As illustrated in FIG. 2, the X-ray detection camera 100B is different from the X-ray detection camera 100A in including a control unit 50B instead of the control unit 50A. FIG. 3 is a block diagram illustrating a functional configuration of the control unit 50B. The control unit 50B is different from the control unit 50A in including a determination unit 52B instead of the determination unit 52A. In the control unit 50B, a specific subject is detected in the X-ray image data, and the application of the high voltage (HV) by the first bias power supply 30 is controlled according to the detection result. Specifically, the control unit 50B turns OFF the first bias power supply 30 at the timing the detection object M is detected in the X-ray image data.

Unlike the determination unit 52A, the determination unit 52B executes a determination process of determining whether or not the luminance value in the X-ray image data falls below a predetermined threshold value. When the luminance value in the X-ray image data falls below the predetermined threshold value in the determination process, the determination unit 52B determines that the X-ray entering the radiation detection element 10 is not transmitted through the inspection object F. The determination unit 52B outputs the determination result to the voltage control unit 53. Note that in the second embodiment, the predetermined threshold value may be lower than the luminance in the X-ray image data when the inspection object F exists in the irradiation region R₃, and may be higher than the luminance in the X-ray image data when the detection object M exists in the irradiation region R₃.

Note that in the second embodiment, when the detection object M is a shielding object that shields the X-ray, the determination unit 52B executes a determination process of determining whether or not the luminance value in the X-ray image data is less than or equal to a predetermined threshold value. When the luminance value in the X-ray image data is less than or equal to the predetermined threshold value in the determination process, the determination unit 52B determines that the X-ray entering the radiation detection element 10 is not transmitted through the inspection object F.

The determination unit 52B executes a new determination process when a predetermined period has elapsed, similarly to the determination unit 52A. For example, similarly to the determination unit 52A, the determination unit 52B may manage the predetermined period by setting a flag. However, unlike the determination unit 52A, the determination unit 52B releases the flag (flag: 0), for example, when the imaging of the detection object M is ended (timing when the luminance value of the X-ray image data exceeds the predetermined threshold value).

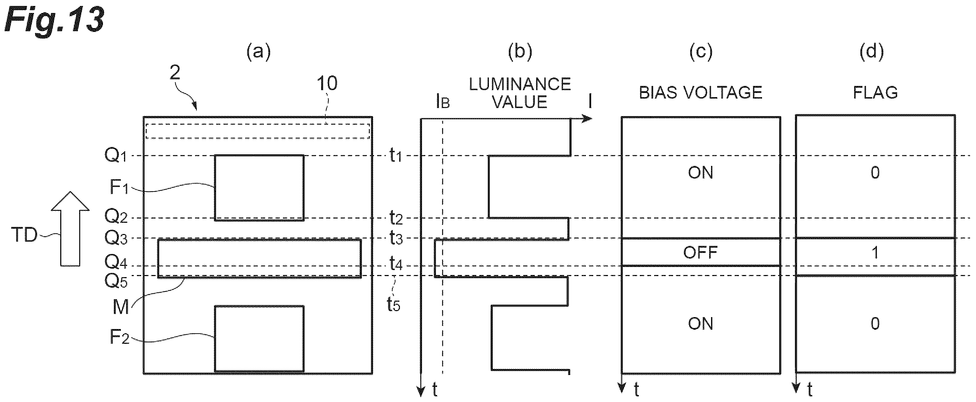

The functions of the determination unit 52B and the voltage control unit 53 will be described in more detail with reference to the example illustrated in FIG. 13. FIG. 13(a) is a diagram illustrating the conveyance unit 2 that conveys the inspection object F in the conveyance direction TD, and the radiation detection element 10 provided on the surface of the conveyance unit 2 on the side opposite to the surface on the side facing the inspection object F. FIG. 13 is a diagram illustrating (b) the luminance value I of the X-ray image data generated by the radiation detection element 10, (c) whether the bias voltage applied to the radiation detection element 10 by the first bias power supply 30 is ON or OFF, and (d) a predetermined period after the reset operation is executed, when each of the positions Q₁ to Q₆ of the belt 2a passes immediately above the radiation detection element 10 in the conveyance unit 2. The vertical axes in FIGs. 13(b) to 13(d) indicate time, and indicate times t₁ to t₆ at which the respective positions Q₁ to Q₆ of the belt 2a pass immediately above the radiation detection element 10. The horizontal axis in FIG. 13(b) indicates the luminance value I in the X-ray image data. In the following description and FIG. 13, the width of the radiation detection element 10 along the conveyance direction TD is not taken into consideration for the sake of simplifying the description.

As a premise, immediately before the position Q₁ passes immediately above the radiation detection element 10, a bias voltage is supplied from the first bias power supply 30 to the radiation detection element 10 (bias voltage: ON). At this time, a predetermined period has already elapsed since the last reset operation was executed (flag: 0). As described above, while the flag is released (flag: 0), the determination unit 52 periodically executes the determination process of determining whether or not a luminance value I in the X-ray image data falls below a predetermined threshold value I_{B}.

First, at time t₁ when the position Q₁ passes immediately above the radiation detection element 10, the inspection object F₁ starts to pass immediately above the radiation detection element 10. At this time, the luminance value of the X-ray image data becomes smaller. Next, at time t₂ when the position Q₂ passes immediately above the radiation detection element 10, the inspection object F₁ finishes passing immediately above the radiation detection element 10. At this time, the luminance value of the X-ray image data becomes larger.

Subsequently, at time t₃ when the position Q₃ passes immediately above the radiation detection element 10, the detection object M starts to pass immediately above the radiation detection element 10. At this time, the luminance value of the X-ray image data becomes significantly small and falls below the predetermined threshold value I_{B}. Therefore, the determination unit 52B determines that the X-ray entering the radiation detection element 10 is not transmitted through the inspection object F, and the reset operation can be executed. The voltage control unit 53 controls the first bias power supply 30 to execute the reset operation which is an operation (bias voltage: OFF) of stopping the application of the voltage to the radiation detection element 10. The determination unit 52A sets a flag to record that the reset operation has been executed (flag: 1). The determination unit 52B does not execute the determination process while the flag is set to on (flag: 1).

Subsequently, at time t₄ when the position Q₄ passes immediately above the radiation detection element 10, the voltage control unit 53 ends the reset operation and controls the first bias power supply 30 to apply a bias voltage to the radiation detection element 10 (bias voltage: ON).

Finally, at time t₅ when the position Q₅ passes immediately above the radiation detection element 10, the detection object M finishes passing immediately above the radiation detection element 10. In the example illustrated in FIG. 13, at time t₅, the luminance value of the X-ray image data increases and exceeds the predetermined threshold value I_{B}. In this case, the determination unit 52B determines that the predetermined period has elapsed and releases the flag (flag: 0).

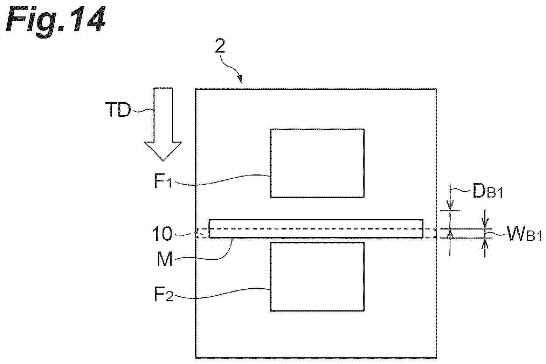

As a premise, the end portion on the downstream side of the detection object M and the inspection object F are separated by greater than or equal to a total distance of the width of the radiation detection element 10 along the conveyance direction TD and a distance obtained by multiplying the time required for the reset operation by the conveyance speed of the conveyance unit 2. FIG. 14 is a schematic view illustrating the conveyance unit 2 that conveys the inspection objects F₁ and F₂. FIG. 14 illustrates a moment at which the detection object M passes immediately above the radiation detection element 10 and is detected by the radiation detection element 10. In the example illustrated in FIG. 14, in the radiation detection element 10, the first bias power supply 30 starts a reset operation. At this time, unless the reset operation is completed before the inspection object F₁ starts to pass immediately above the radiation detection element 10, the X-ray detection camera 100B cannot image the X-ray transmitted through the inspection object F₁. Therefore, the end portion on the downstream side of the detection object M and the inspection object F₁ are separated by greater than or equal to the total distance of the width W_{B1} of the radiation detection element 10 along the conveyance direction TD and the distance D_{B1} obtained by multiplying the time required for the reset operation by the conveyance speed of the conveyance unit 2.

Since the detection object M merely needs to be detectable by the radiation detection element 10, the detection object M may have a characteristic shape as illustrated in FIG. 11(c), and for example, may have a cross shape, a rod shape, a triangle shape, a quadrangular shape, a circular shape, or the like. In this case, the determination unit 52B executes the determination process of determining whether or not the detection object M is detected in the X-ray image data. When the detection object M is detected in the X-ray image data in the determination process, the determination unit 52B determines that the X-ray entering the radiation detection element 10 is not transmitted through the inspection object F.

Furthermore, the "time point at which the detection object M starts to pass immediately above the radiation detection element 10" to the "time point at which the detection object M finishes passing immediately above the radiation detection element 10" is a period including the entire length of the radiation detection element 10 along the conveyance direction TD when the detection object M conveyed in the conveyance direction TD is viewed from the X-ray generator 3.

In the second embodiment, after the reset operation is executed, the determination unit 52B may not perform the determination process until the falling edge is detected with respect to the displacement of the luminance value of the X-ray image data, and may perform the determination process when the falling edge is detected. In the example illustrated in FIG. 13, the determination unit 52B does not perform the determination process since the luminance value does not fall sharply until the inspection object F₂ starts to pass immediately above the radiation detection element 10 after the reset operation is performed at time t₃. Note that when another detection object M located upstream of the detection object M starts to pass immediately above the radiation detection element 10 and the luminance value I of the X-ray image data falls sharply, the determination unit 52B may detect a falling edge in the displacement of the luminance value of the X-ray image data and execute the determination process. When the luminance value I of the X-ray image data rises sharply at time T₅, the determination unit 52B may detect the rising edge in the displacement of the luminance value of the X-ray image data and execute the determination process.

Furthermore, the determination unit 52B releases the flag when the luminance value I of the X-ray image data exceeds the predetermined threshold value I_{B}, but this is not the sole case. For example, the determination unit 52B may release the flag when exceeding another threshold value different from the threshold value I_{B}.

Also in the X-ray inspection apparatus 1B, the X-ray detection camera 100B, and the radiation detection method according to the second embodiment, similarly to the first embodiment, the occurrence of the polarization phenomenon in the radiation detection element 10 can be suppressed, and the X-ray can be more reliably detected when the X-ray entering the radiation detection element 10 is transmitted through the inspection object F.

In addition, in the second embodiment, when the luminance value in the X-ray image data falls below the predetermined threshold value in the determination process, the determination unit 52B determines that the X-ray is not transmitted through the inspection object F. According to such a configuration, when the detection object M that shields or significantly absorbs the X-ray is disposed at a place where the inspection object F is not disposed, it is possible to more reliably determine whether or not the X-ray entering the X-ray detection camera 100B is transmitted through the inspection object F. As a result, the reset operation is more reliably executed at the timing when the X-ray entering the X-ray detection camera 100B is not transmitted through the inspection object F.

In the X-ray detection camera 100B according to the second embodiment, the radiation detection element 10 continuously outputs the X-ray image data. After the reset operation is executed, the determination unit 52B may not perform the determination process until the change amount of the luminance value among the plurality of X-ray image data continuously output from the radiation detection element 10 exceeds the predetermined threshold value, and may perform the determination process when the change amount exceeds the predetermined threshold value. According to such a configuration, after the reset operation is executed, the determination process is restarted only after the imaging of the inspection object F by the X-ray detection camera 100B is finished. In the second embodiment, the determination unit 52B executes the determination process when the falling edge is detected in the displacement of the luminance value of the X-ray image data after the reset operation is executed. Thus, it is possible to suppress the execution of the reset operation until it is again necessary to eliminate the polarization phenomenon in the X-ray detection camera 100B after the reset operation is executed. As a result, the X-ray detection camera 100B can be operated more efficiently.

In such an X-ray inspection apparatus 1B, the same operation effects as those of the first embodiment are obtained.

### [Modified Examples]

Although the X-ray inspection apparatuss according to the first embodiment and the second embodiment have been described above, the present invention is not limited thereto, and various modifications can be applied.

In the first embodiment described above, the X-ray image data detected by the X-ray detection camera 100A may be output to the control apparatus 4, and the addition process may be performed in the control apparatus 4. When the X-ray image data output from the X-ray detection camera 100A is data for each line as described above, the separation distance among the plurality of inspection objects F may be greater than or equal to the total distance of the width of each pixel line of the radiation detection element 10 and the distance obtained by multiplying the time required for the reset operation with the conveyance speed of the conveyance unit 2. In this regard, for example, when a configuration in which a time delay integration (TDI) addition result is output from a plurality of radiation detection elements to the control unit is adopted, the distance between the inspection objects may be set in further consideration of the time during which the inspection object passes through all the radiation detection elements.

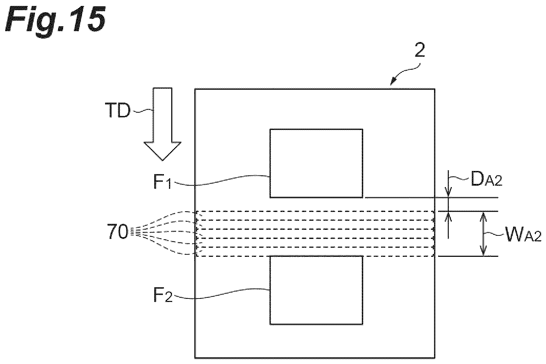

FIG. 15 is a schematic view illustrating the conveyance unit 2 that conveys the inspection objects F₁ and F₂. FIG. 15 illustrates the moment when the inspection object F₂ has finished passing immediately above the radiation detection element 70. Each radiation detection element 70 here has the same configuration as the above-described radiation detection element 10 and the like. In the example illustrated in FIG. 15, the determination process is started and the reset operation is started at the time point when the imaging is ended in all the radiation detection elements 70. At this time, unless the reset operation is completed before the inspection object F₁ starts to pass immediately above the radiation detection element 70, the radiation detection element 70 cannot image the X-ray transmitted through the inspection object F₁.

Therefore, the separation distance between the inspection object F₁ and the inspection object F₂ is a distance greater than or equal to the total value of the result of multiplying the time related to the reset operation by the conveyance speed of the conveyance unit 2 and the result of multiplying the number of stages (the number of additional stages) of the radiation detection element 70 by the width of each radiation detection element 70. In the example illustrated in FIG. 15, the separation distance between the inspection object F₁ and the inspection object F₂ is greater than or equal to the total distance of the total W_{A2} of the widths of all the radiation detection elements 70 along the conveyance direction TD and the distance D_{A2} obtained by multiplying the time required for the reset operation by the conveyance speed of the conveyance unit 2.

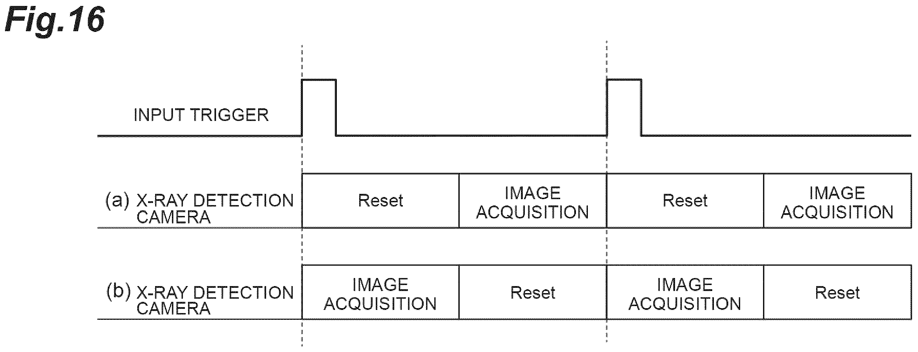

Furthermore, in the X-ray detection cameras 100A and 100B, the reset operation and the imaging process may be controlled to automatically interlock with each other. FIG. 16 is a diagram illustrating an example of the relationship between the input trigger input to the X-ray detection camera and the operation of the X-ray detection camera. Note that the input trigger here is, for example, a trigger linked to completion of the determination process. As illustrated in FIG. 16(a), the reset operation may be controlled to be executed at the timing when the input trigger rises. In this case, when the reset operation is completed, imaging may be automatically performed, and X-ray image data of an arbitrary number of lines may be acquired. Furthermore, as illustrated in FIG. 16(b), the imaging may be performed at the timing when the input trigger rises, and the X-ray image data of an arbitrary number of lines may be acquired. In this case, the reset operation may be automatically executed immediately after the X-ray image data is acquired.

In addition, the time during which the bias voltage is applied to the radiation detection element 10 is counted, and the reset operation may be executed only in a case where the time exceeds a certain value. In this case, the time during which the X-ray is emitted and the bias voltage is applied to the radiation detection element may be counted.

In the first embodiment and the like described above, whether or not to execute the reset operation is determined based on the luminance value of the X-ray image data, but this is not the sole case. Furthermore, the cycle and time for executing the reset operation may be arbitrarily set. Specifically, the cycle and time for executing the reset operation may be set based on conditions such as a tube voltage and a tube current of the X-ray generator 3. In addition, the cycle and time for executing the reset operation may be set based on conditions such as the distance between the inspection object F and the X-ray detection camera 100A and the like, and the type of the inspection object F, and the like.

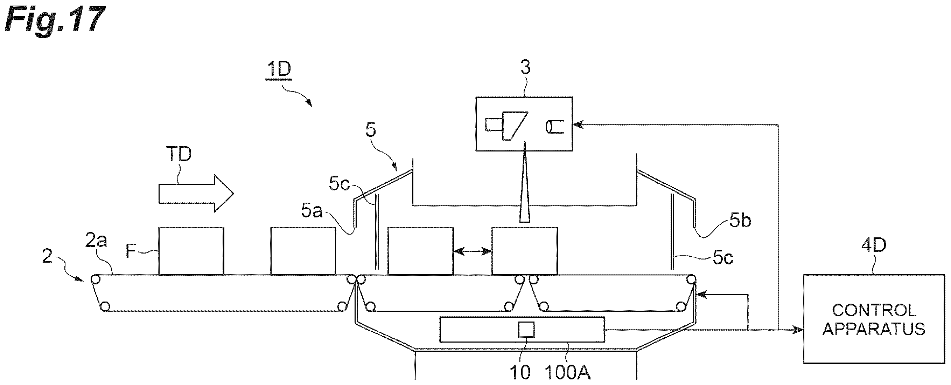

Furthermore, in the first embodiment and the like described above, the X-ray detection camera 100A is electrically coupled only to the control apparatus 4, but this is not the sole case. FIG. 17 is a configuration diagram illustrating an X-ray inspection apparatus 1D according to a modified example. The X-ray inspection apparatus 1D includes a conveyance unit 2, an X-ray generator 3, an X-ray detection camera 100A, a control apparatus 4D, and a shielding portion 5. In the X-ray inspection apparatus 1D according to the present modified example, the X-ray detection camera 100A is electrically coupled to each of the conveyance unit 2, the X-ray generator 3, and the control apparatus 4D.

In the X-ray inspection apparatus 1D according to the modified example, when the reset operation is executed by the voltage control unit 53, the control unit 50A of the X-ray detection camera 100A outputs an output signal for stopping the operation related to the imaging in the X-ray inspection apparatus 1D to the conveyance unit 2, the X-ray generator 3, and the control apparatus 4D.

Specifically, when the reset operation is executed by the first bias power supply 30, the control unit 50A may output an output signal for controlling the conveyance unit 2 to stop the conveyance to the outside of the X-ray detection camera 100A, specifically, the conveyance unit 2. The control unit 50A may stop the conveyance in the conveyance unit 2 by stopping an output signal (stage drive trigger) output when the conveyance is executed in the conveyance unit 2. Furthermore, the conveyance unit 2 may be controlled by the control apparatus 4D. In this case, when the reset operation is executed by the first bias power supply 30, the control unit 50A outputs an output signal for requesting stop of conveyance in the conveyance unit 2 to the control apparatus 4D. Then, the control apparatus 4D receives the output signal and stops the conveyance in the conveyance unit 2.

When the reset operation is executed by the first bias power supply 30, the control unit 50A may output an output signal for stopping the irradiation of X-ray by the X-ray generator 3 to the outside of the X-ray detection camera 100A, specifically, the X-ray generator 3. The control unit 50A may output an output signal (light source drive trigger) so that the X-ray generator 3 emits the X-ray. In this case, the control unit 50A may stop the output signal when the reset operation is executed by the first bias power supply 30. Furthermore, the control unit 50A may transmit an output signal requesting to stop of the irradiation of X-ray by the X-ray generator 3 to the control apparatus 4D. In this case, the control apparatus 4D receives the request and controls the X-ray generator 3 so as to stop the X-ray irradiation.

In the X-ray inspection apparatus 1D according to the modified example, based on the X-ray image data output from the radiation detection element 10, it is determined whether or not a reset operation for executing voltage control on the radiation detection element 10 so that electric charge is not collected by the radiation detection element 10 can be executed. When the reset operation can be executed, the reset operation is executed after an output signal for stopping the operation related to imaging in the X-ray detection camera 100A is output to the external apparatus. According to such a configuration, when the reset operation is executed at the timing when the X-ray entering the X-ray detection camera 100A is not transmitted through the inspection object F, the operation of the external apparatus related to the imaging of the inspection object F is stopped. At this time, for example, at least one of the conveyance of the inspection object F or the irradiation of the X-ray by the X-ray generator 3 is stopped. As a result, the reset operation can be more reliably completed within a period in which the X-ray entering the X-ray detection camera 100A is not transmitted through the inspection object F. As a result, the occurrence of the polarization phenomenon in the radiation detection element 10 can be suppressed, and the X-ray can be more reliably detected when the X-ray entering the X-ray detection camera 100A is transmitted through the inspection object F.

### Reference Signs List

1A, 1B, 1D X-ray inspection apparatus (radiation detection system)
2 conveyance unit (conveyance apparatus)
3 X-ray generator (light source)
100A, 100B X-ray detection camera (radiation detection apparatus)
10, 70 radiation detection element (detection element)
24 second electrode (pixel electrode)
25 third electrode (pixel electrode)
30 first bias power supply (voltage source)
50A, 50B control unit
52A, 52B determination unit
53 voltage control unit
F, F₁, F₂ inspection object (object)
I luminance value
I_{A}, I_{B} threshold value
R₃ irradiation region

## Claims

1. A radiation detection apparatus comprising:
a detection element that directly converts incident radiation into electric charges and outputs a result of collecting the electric charges for each of a plurality of pixel electrodes as imaged image data;
a voltage source that applies a bias voltage to the detection element; and
a control unit electrically coupled to the detection element and the voltage source; wherein
the control unit comprises a determination unit that executes a determination process of determining whether or not a reset operation of executing a voltage control on the detection element so that the electric charge is not collected by the detection element is executable based on the imaged image data output from the detection element, and a voltage control unit that controls the voltage source to execute the reset operation when the determination unit determines that the reset operation is executable.

2. The radiation detection apparatus according to claim 1, wherein the determination unit determines that the reset operation is executable when the determination unit determines that the radiation is not transmitted through an object based on the imaged image data in the determination process.

3. The radiation detection apparatus according to claim 2, wherein the determination unit determines that the radiation is not transmitted through the object when a luminance value in the imaged image data exceeds a predetermined threshold value in the determination process.

4. The radiation detection apparatus according to claim 2, wherein the determination unit determines that the radiation is not transmitted through the object when a luminance value in the imaged image data falls below a predetermined threshold value in the determination process.

5. The radiation detection apparatus according to claim 3 or 4, wherein
the detection element continuously outputs the imaged image data, and
after the reset operation is executed, the determination unit does not perform the determination process until a change amount in the luminance value among the plurality of imaged image data continuously output from the detection element exceeds a predetermined threshold value, and executes the determination process when the change amount exceeds the predetermined threshold value.

6. The radiation detection apparatus according to any one of claims 2 to 4, wherein the determination unit does not perform the determination process until a predetermined period, which is a period in which the reset operation is unnecessary, elapses after the reset operation is executed, and executes the determination process when the predetermined period has elapsed.

7. The radiation detection apparatus according to claim 6, wherein
the detection element operates based on a reference clock, and
the determination unit counts the reference clock to determine whether or not the predetermined period has elapsed.

8. The radiation detection apparatus according to claim 1, wherein the reset operation is either an operation of stopping application of a voltage to the detection element or an operation of applying a reverse bias voltage to the detection element.

9. A radiation detection system comprising:
a radiation detection apparatus according to claim 1;
a light source that emits the radiation; and
a conveyance apparatus that conveys an object such that the object passes through an irradiation region of the radiation.

10. A radiation detection method comprising:
a step of directly converting incident radiation into electric charge and applying a bias voltage to a detection element that outputs a result of collecting the electric charge for each of a plurality of pixel electrodes as imaged image data;
a step of acquiring the imaged image data from the detection element;
a step of determining whether or not a reset operation of executing a voltage control on the detection element so that the electric charge is not collected by the detection element is executable based on the imaged image data output from the detection element; and
a step of executing the reset operation when determination is made that the reset operation is executable in the step of determining.
